## Europäisches Patentamt
## European Patent Office
## Office européen des brevets

(19)

(11) Veröffentlichungsnummer: **0 121 731**
**B1**

(12) **EUROPÄISCHE PATENTSCHRIFT**

(45) Veröffentlichungstag der Patentschrift:
14.01.87

(51) Int. Cl.⁴: **C 08 J 9/30, C 08 L 61/24**

(21) Anmeldenummer: **84102171.0**

(22) Anmeldetag: **01.03.84**

(54) **Verfahren zur Herstellung eines formaldehydarmen Harnstoff-Formaldehyd-Kombinations-Schaumes.**

(30) Priorität: **09.03.83 DE 3308237**

(43) Veröffentlichungstag der Anmeldung:
**17.10.84 Patentblatt 84/42**

(45) Bekanntmachung des Hinweises auf die Patenterteilung:
**14.01.87 Patentblatt 87/3**

(84) Benannte Vertragsstaaten:
**AT BE CH DE FR GB IT LI NL**

(56) Entgegenhaltungen:
**DE-A-2 501 368**
**US-A-3 231 525**
**US-A-3 979 341**

(73) Patentinhaber: **Schaum- Chemie W. Bauer GmbH & Co. KG, Kallenbergstrasse 21, D-4300 Essen 1 (DE)**

(72) Erfinder: **Baumann, Heinz, Römerstrasse 15, D-6711 Kleinniedesheim (DE)**

(74) Vertreter: **Wolff, Hans Joachim, Dr.jur. Dipl.- Chem., Beil, Wolff & Beil Rechtsanwälte Postfach 80 01 40 Adelonstrasse 58, D-6230 Frankfurt am Main 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 121 731 B1

## Beschreibung

Die Erfindung betrifft ein Verfahren zur Herstellung eines formaldehydarmen Harnstoff-Formaldehyd-Kombinations-Schaumes durch Verschäumen einer Lösung eines Harnstoff-Formaldehyd-Harz-Vorkondensates mit einer Härter-Schaummittellösung unter Zugabe von zusätzlichem Harnstoff.

Harnstoff-Formaldehyd-Harz-Schaumkunststoffe werden in geeigneten Apparaturen hergestellt, indem man eine Schaummittellösung, die einen Härter enthält, mit Luft aufschäumt und ein Harnstoff-Formaldehyd-Harz-Vorkondensat den vorgebildeten Schaumlamellen zumischt. Es entsteht ein Fertigschaum, der nachträglich nicht expandiert und aus dem Vorsatzschlauch der Apparatur mit ca. 1,5 bar in beliebig geformte Hohlräume eingebracht, aushärtet und trocknet.

Unter Kombinationsschaum versteht man die Zugabe von mindestens 10 % Festanteilen im Schaummittel, z.B. ein Schaum, der aus einem 40%igen Harzvorkondensat und einem Schaummittel mit einem Gehalt von mindestens 10 % Feststoff verschäumt worden ist.

Die Erfindung läßt sich sowohl bei der sogenannten "Schaumaufschäumung" als auch bei der "Harzaufschäumung" anwenden oder bei bekannten Apparaturen, denen man die Komponenten einzeln zuführt und dann aufschäumt (vgl. H. Baumann, "Schaumstoff Isoschaum im Schmelztiegel der Praxis", Heizung-Lüfung-Haustechnik 18 (1967), S. 17-19 sowie a.a.O. Urea-Formaldehyde Resins, S. 192).

Bei der sogenannten Harzaufschäumung enthält die Harzlösung einen zur Aufschäumung notwendigen neutralen Tensidanteil. Diesem Gemisch wird nach der Luftaufschäumung, erst kurz vor Verlassen des Schaumes aus der Apparatur, der Härter zugedüst. Die Verwendung von UF-Schaumkunststoffen ist der Literatur zu entnehmen, z.B. H. Baumann: "Fortschritte bei UF-Schaumkunststoffen - Neue Polykondensate und Schaumkunststoffe". Kunststoffe 69 (1979) 440-443. Technisch, im großen Umfang, werden Uf-Harze seit über 50 Jahren hergestellt (Houben-Weyl, Bd. XIV/2 (1963) 319 ff).

Die Ausdrücke "Harnstoff-Formaldehyd" und "UF" werden im nachfolgenden identisch angewendet.

Die UF-Schaumkuntstoffe geben beim Austrocknen, das bei den handelsüblichen Schäumen bis zu 28 Tagen dauern kann, abhängig von der Umgebungstemperatur und von der Luftfeuchtigkeit, geringe Mengen Formaldehyd, der im Wasser gelöst ist, und u.a. von kurzkettigen methylolhaltigen Gruppen stammt, die sich unter geeigneten Bedingungen zu Formaldehyd umsetzen können, an die Luft ab. Dies führt zu Geruchsbelästigungen.

Die UF-Schaumkunststoffe haben gegenüber anderen Dämmmaterialien viele Vorteile, sie werden z.B. aus wäßrigen Lösungen hergestellt und sind erdölunabhängig, tragen bei einem Brand nicht zur Ausbreitung des Feuers bei und liegen in einem günstigen, niederen Preisbereich. 40 l Grundlösung, z.B. 20 l Harzlösung und 20 l Schaummittellösung geben 1000 l Fertigschaum. Es entfällt die aufwendige Lagerhaltung wie bei Plattenware wie auch hohe Versicherungskosten. Sie gehören zu den Dämmmarerialien, welche die volkswirtschaftlichen Forderungen erfüllen.

In den letzten zwei Jahren hat man der Chemikalie Formaldehyd Gesundheitsschädigungen unterstellt, die jedoch nachweislich nicht höher liegen als die Schädlichkeit anderer Substanzen einschließlich Lebensmittel, Blumen, die teilweise auch zu Allergien führen können.

Obgleich man UF-Schaumkunststoffe mehr als 30 Jahre unbeanstandet verarbeitete, war der ab und an auftretende geringe Formaldehydgeruch ein wissenschaftlich-technisches Problem, das es zu lösen galt.

Schon früh, 1939, schlug man vor, unter Verwendung von Alkoholen den Restformaldehyd im UF-Schaum zu eliminieren. (DRP 729 029). Eine weitere, wenn auch geringe Formaldehydreduzierung wird erreicht durch Zugabe von Alkoholen mit 4 oder mehr Hydroxylgruppen zum Harz (DB-C 1 054 232).

Man versuchte ferner, der zur Herstellung von UF-Schäumen verwendeten Schaummittellösungen, die üblicherweise Salze, insbesondere Na-Salze von Aryl-, Alkyl- oder Alkarylsulfonsäuren als Schaummittel enthalten, größere Mengen Harnstoff zuzusetzen, jedoch trat dabei Trübung bzw. Ausfällung des Harnstoffs auf und führte zum Nachlassen der Druckfestigkeit und zur Abrasionsneigung des UF-Schaumes.

Die US-A-3 231 525 versuchte dieses Problem zu lösen, indem sie anstelle des Na-Salzes einer Sulfonsäure in der Härter-Schaummittellösung die Säure als solche verwendete. Dabei ließen sich zwar wesentlich größere Harnstoffmengen in der Schaummittellösung lösen, die dabei entstehenden Schäume sind jedoch nicht dimensionsstabil, sondern schrumpfen und entsprechen bezüglich der hydrothermischen Belastung nicht dem technischen Standard.

In einer älteren nicht vorveröffentlichten Anmeldung wurde vorgeschlagen, bis zu 96 % Harnstoff in einem etwa 10 bis 30%igen wäßrigen Extrakt einer Alkyl-, Aryl- oder Alkarylsulfonsäure zu lösen, diese Lösung mit einer üblichen Härter-Schaummittellösung, die das Na-Salz einer Alkyl-, Aryl- oder Alkarylsulfonsäure in einer zum Verschäumen üblichen wäßrigen Verdünnung enthält, zu vermischen und dieses Gemisch zusammen mit einer Harnstoff-Formaldehyd-Harz-Vorkondensat-Lösung auf übliche Weise zu verschäumen.

Ferner ist sei langem bekannt, ein Harnstoff-Formaldehyd-Harz-Vorkondensat nachträglich und zusätzlich mit Harnstoff zu versetzen.

In Technische Information der BASF, September 1981, heißt es: "Durch Zugabe von technisch reinem Harnstoff kann der freie Formaldehyd zu einem großen Teil gebunden werden.

Die Harnstoffmenge hängt vom jeweiligen Verwendungszweck ab. Als Richtwert für den Harnstoff-Zusatz können, auf Festharz bezogen 10 bis 12 % (Massenanteile) angenommen werden. Selbstverständlich läßt sich durch höhere Zusätze noch mehr Formaldehyd binden, doch muß man prüfen, ob die zugleich eintretende Verschlechterung der mechanischen Eigenschaften des fertigen Schaumstoffs in Kauf genommen werden kann."

Es folgen dann Beispiele einer Zugabe von 12 % und 16% Harnstoff, bezogen auf Festharz.

Der mit dem Formaldehyd-Dräger-Prüfröhrchen 0,5 gemessene Formaldehydwert in einem UF-Schaum, dessen Harz-Vorkondensat man mit etwa 12 % Harnstoff versetzte, beträgt durchschnittlich 10 - 15 ppm, je nach Luftfeuchtigkeit und Temperatur und je nach Alter des Schaumes. Selbst nach vielen Jahren lassen sich in diesen Schäumen noch 2 bis 4 ppm Formaldehyd nachweisen, obwohl keine Formaldehydabgabe mehr an die Außenluft erfolgt.

Man verwendet die Dräger-Methode, weil mit ihr kurzfristig, kontinuierlich und ohne großen Arbeitsaufwand im Labor- und Technikumsmaßstab Formaldehyd schnell nachzuweisen ist.

Durch Zusatz einer Harnstoffmenge von über 12 % läßt sich ein formaldehydfreier oder -armer UF-Schaum mit instabilem Lamellengefüge herstellen, was dann von technischer Bedeutung ist, wenn der Fertigschaum in einem weiteren Arbeitsgang gemahlen werden muß, z.B. bei der Herstellung von Puder für die pharmazeutische oder kosmetische Verwendung, für Pulver zur Teppichreinigung, zur Herstellung von Füllstoffen, Ölabsorptionsmitteln, Katalysatoren, Tablettengrundlagen, Kompaktpuder, oder für bestimmte Verwendungen in der Landwirtschaft.

Diese strukturinstabilen Schäume können direkt nach dem Trocknen des Fertigschaumes in einer Kugel- oder Pralltellermühle, ohne ihn vorher zerflocken zu müssen, vermahlen werden.

Bei der Reduktion von Harnstoff zu Harzlösung erkennt man, daß damit auch der Temperaturanstieg geringer wird, was auf die Reaktion der Verbindungen untereinander Einfluß hat. Interessanterweise bleibt bei dieser Menge an Harnstoff der Lamellenverbund im Schaum erhalten, jedoch beträgt die Abbindezeit des fertigen Schaumes über 2 Minuten und mehr.

Während dieser langen Abbindezeit kollabieren die Lamellen des Schaumes, was wiederum zur Inhomogenität und zur Verringerung der Druckfestigkeit führt.

Allein durch die vermehrte Zugabe an Härter läßt sich zwar die Abbindezeit verkürzen, aber die Lamellenstruktur allgemein nicht verbessern.

Alle bisherigen Versuche, den Restformaldehyd in Schaumstoffen zu eliminieren, waren nicht zufriedenstellen weil entweder die gewünschte Eliminierung nicht ausreichend war oder aber im Hinblick auf die Dimensionsbeständigkeit, Rissebildung oder Flammfestigkeit unbefriedigende Produkte erzielt wurden.

Man versuchte zwar immer wieder, die physikalischen und/oder chemischen Eigenschaften des fertigen UF-Schaumes umfassend zu verbessern, wobei in der Literatur z.B. Stabilisatoren, Reaktionsbeschleuniger, Zusatz-Zuschlag-Stoffe, Zusatzmittel, additive Füllstoffe, Plastifizierungsmittel usw. beschrieben werden. Diese Versuche blieben jedoch ohne wesentliche Bedeutung.

Aufgabe der Erfindung war es, größere Mengen Harnstoff einzubringen, um einen UF-Schaum mit geringer Formaldehydabgabe und schnellerer Austrocknungszeit zu erzielen, der jedoch dimensionsstabil, frei von Rissen und druck-, abrasions- und flammfest ist, d.h. in seinen Gesamteigenschaften dem technischen Standard entspricht.

Diese Aufgabe wird erfindungsgemäß dadurch gelöst, daß man einer üblichen Lösung eines Harnstoff-Formaldehyd-Harz-Vorkondensats vor dem Verschäumen bis zu 50 % Harnstoff, bezogen auf Harzfeststoff, und zusätzlich eine oder mehrere Verbindungen aus der Gruppe der schwefelhaltigen Alkylverbindungen, gesättigten einbasischen Carbonsäuren, gesättigten und ungesättigten Dicarbonsäuren, Purinverbindungen, anorganischen Säuren der Gruppe der Halogene und Chalkogene und deren Salze, Phosphorsäuren und deren Salze, Alkalimetallsalze und Erdalkalimetallsalze in einer geringen Menge zusetzt, die so bemessen ist, daß ein pH-Wert von 7 nicht unterschritten wird, und anschließend die Lösung mit einer Härter-Schaummittellösung auf übliche Weise verschäumt.

Überraschenderweise wurde gefunden, daß die Lamellenstruktur des Schaumes erhalten bleibt, wenn man in der Harzlösung neben einer größeren Menge Harnstoff weitere kleinere Mengen bestimmter Verbindungen löst.

Diese Verbindungen wirken nicht katalytisch, sondern verhindern eine quantitative Reaktion von Harnstoff und niedermolekularen Verbindungen, wie die sinkende Reaktionstemperatur ausweist. Sie haben Einfluß auf die Stabilität der Lamellen, also einen "Verkettungseffekt". Sie werden daher als "Conectionsmittel" bezeichnet.

Die erfindungsgemäß zusätzlich verwendeten Verbindungen sind schwefelhaltige Alkylverbindungen wie z.B. Alkylsulfide, Sulfoxide, Sulfone, Alkylaryl- oder Aryl-, Alkylsulfonsäuren, gesättigte einbasische Carbonsäuren wie z.B. Ameisen-, Essigsäure, gesättigte und ungesättigte Dicarbonsäuren, wie z.B. Oxal-, Malon-, Bernstein-, Malein- und Fumarsäure, Purinverbindungen wie z.B. Harnsäure, Xanthin, anorganische Säuren und Salze aus der Gruppe der Halogene wie z.B. Salzsäure, Chloride, anorganische Säuren und Salze aus der Gruppe der Chalkogene wie Schwefelsäure, Thioschwefelsäure und Salze, Phosphorsäuren und deren Salze, Erdalkalimetallsalze wie z.B. Calciumchlorid, Magnesiumchlorid, Magnesiumsulfat und Alkalimetallsalze wie z.B. Natriumchlorid, Kaliumchlorid.

Die Verwendung von anorganischen Säuren als Härter in UF-Harzvorkondensat-Lösungen ist bekannt. Man fand jedoch, daß bei Verwendung dieser Säuren in der Harzlösung in geringen Mengen keine Härtung erfolgt bzw. so weit verzögert wird, daß zuvor der Verkettungseffekt der zusätzlich verwendeten Verbindungen eintritt.

Eine frisch hergestellte handelsübliche UF-Harnstofflösung mit zusätzlichen 10 % Harnstoff, bezogen auf Harzfeststoff, hat beispielsweise einen pH-Wert von etwa 7,7 bis 7,8, der nach 6 Tagen auf etwa pH 8,00 ansteigt. Wenn man der frischen Lösung nochmals etwa 55 g (etwa 14 Gew.-%, bezogen auf Harzfeststoff) zusetzt, steigt der pH-Wert auf etwa 8,27. Die Menge der zusätzlichen Verbindung soll so bemessen sein, daß der pH-Wert der Harzlösung nicht unter 7,00 absinkt, weil im sauren Milieu einige dieser zusätzlichen Verbindungen als Härter reagieren.

Diese zusätzlichen Verbindungen können der Harzlösung allein zugesetzt werden. Es ist aber auch möglich, ein Teil derjenigen Conectionsmittel, die im sauren Milieu nicht als Härter reagieren, dem Schaummittel zuzusetzen. Sie sollen die Lagerstabilität und damit die Viskosität der Harze über einen Zeitraum von 6 - 8 Wochen nach Möglichkeit nicht verändern, es sei denn, der Verarbeitungszeitpunkt der Lösungen ist genau bekannt. Es können eine oder mehrere dieser zusätzlichen Verbindungen zugesetzt werden.

Für jedes handelsübliche Harz aus unterschiedlichen Bezugsquellen ist die Menge an zugegebenem Harnstoff und die Menge dieser zusätzlichen Verbindung empirisch zu ermitteln, da die Molverhältnisse von Harnstoff und Formaldehyd bei der Harzherstellung einerseits und die diesen Harzen zusätzlich zugegebenen Mengen an Harnstoff andererseits sich unterschiedlich auswirken können.

In jedem Falle sind die Mengen im Vergleich zum zugesetzten Harnstoff gering, d.h. obgleich, wie bereits vorstehend ausgeführt, jene nicht katalytisch wirken, sondern eine quantitative Reaktion von Harnstoff und niedermolekularen Verbindungen verhindern, sind ihre Mengen als katalytische Mengen zu bezeichnen.

In dem erfindungsgemäß hergestellten UF-Schaum ist der Formaldehyd nicht quantitativ eliminiert, jedoch gegenüber den bisherigen UF-Schaumkunststoffen, aus UF-Harzen, die zusätzlich Harnstoff enthalten, um 50 bis 80 % reduziert. Dieser Schaum genügt, ordnungsgemäß nach Werksvorschriften verschäumt, den heutigen ökologischen Vorstellungen, führt nicht mehr zu Geruchsbelästigungen und erfüllt die deutsche Norm DIN 18 159, Teil 2, A 1.

Auch sind die Mehrkosten durch den Zusatz von Harnstoff und dieser zusätzlichen Verbindung wirtschaftlich vertretbar.

Die zur UF-Schaumherstellung geeigneten Schaummittel, auch als Tenside, Substanzen mit grenzflächenaktiven Eigenschaften, "grenzflächenaktive" Stoffe, "Surfactance" oder "Detergentien" bezeichnet, vorwiegend auf der Grundlage von Aryl- und Alkylsulfonsäuresalzen, sind ausführlich beschrieben u.a. von K. Lindner, "Tenside", drei Bände, Wissenschaftliche Verlagsanstalt mbH, Stuttgart (1964); Band 3 erschien 1971; G.Jawalek "Tenside", Akademie Verlag, Berlin (1975); H.Stache "Tensid-Taschenbuch", Hanser-Verlag, München 1979); und in den Druckschriften und Merkblättern der Hersteller.

Als Schaummittel bevorzugt wird beispielsweise Diisobutylnaphthalinsulfonsaures Natrium.

Eine spritzfertige Schaummittellösung besteht beispielsweise aus 20 % Diisobutylnaphthalinsulfonsaurem Natrium, 4 % Resorcin, 25 E 85%iger H PO und 51 % enthärtetem Wasser. 45 ml dieses Extraktes gibt man zu 956 ml Wasser und erhält so die zur Verschäumung verwendete Lösung.

Harnstoff-Formaldehyd-Vorkondensate (Aminoplaste) sind vielfach in der Literatur beschrieben (Beat Mever "Urea Formaldehyde Resins" (1979), Addison-Wesley publishing Company, Inc.). Zur UF-Schaumherstellung sind aber nur solche Harze geeignet, die hierfür eigens formuliert sind. Leimharze z.B. führen zu nichtwasserfesten Schäumen und können im Fertigschaum zu Pilzbildung führen.

Erfindungsgemäß besonders geeignet ist beispielsweise ein 40%iges wäßriges Harnstoff-Formaldehyd-Harz-Vorkondensat, das aus Harnstoff und Formaldehyd im Mol-Verhältnis 1:1,2 in bekannter Weise bei 100° C hergestellt worden, mit NaOH auf einen pH-Wert um etwa 7,0 neutralisiert und auf Raumtemperatur abgekühlt worden ist.

Als Harnstoff sind alle Alkyl- und Arylharnstoffe zu verwenden, z.B. Monoalkyl-Monoaryl-Harnstoffe, Dialkyl-Diaryl-Harnstoffe, Trialkyl-Triarylharnstoffe, Tetraalkylharnstoffe und die Derivate des Isoharnstoffs.

Anstelle von Harnstoff kann man auch Thioharnstoff verwenden, der allerdings in der Literatur als cancerogen beschrieben ist, von dem alle Kondensations-Reaktionen des Harnstoffs bekannt sind Ihn kann man auch mit Harnstoff kombinieren.

Alle weiteren aus der Literatur bekannten Zusatzmittel, wie Stabilisatoren, Zusatzstoffe, Füllstoffe und Farben usw. sind ohne abschwächende Wirkung zuzugeben, wenn sie sorgfältig auf die Harnstoffmenge und das Conectionsmittel rezeptiert sind.

Nachstehende Beispiele dienen der weiteren Erläuterung der Erfindung.

## Vergleichsbeispiel 1

Man versetzte 1 l einer handelsüblichen 40%igen wäßrigen Harnstoff-Formaldehyd-Harz-Vorkondensat-Lösung, die dadurch hergestellt worden war, daß man Harnstoff und Formaldehyd im Mol-Verhältnis 1:1,2 auf bekannte Weise bei 100°C umsetzte, mit 48 g, d.h. 12 Gew.-% Harnstoff, bezogen auf Harzfeststoff,und verschäumte sie in bekannter Weise mit einer Härter-Schaummittellösung, die dadurch hergestellt worden war, daß man 45 ml eines Extraktes aus 20 % Diisobutylnaphthalinsulfonsaurem Natrium, 4 % Resorcin, 25 % 85%iger $H_3PO_4$ und 51 % enthärtetem Wasser mit Wasser auf 1 l verdünnte.

Ein Liter des frischen Schaumes wog 42 g. Seine Abbindezeit betrug 35 s. Formaldehyd mit dem Dräger-Röhrchen 0,5 im Schaum gemessen, betrug am 2. Tag 15 ppm, am 8. Tag 12 ppm.

Die Lamellenstruktur des Schaums war relativ stabil.

## Vergleichsbeispiel 2

Man verfuhr nach Vergleichsbeispiel 1 mit dem Unterschied, daß man anstelle 48 g bzw. 12 Gew.-% Harnstoff 100 g, d.h. 25 Gew.-%, Harnstoff zusetzte.

Man stellte dabei fest, daß sich die Temperatur im Fertigschaum nur noch um 6°C erhöhte.

Der Lamellenverband des Schaumes war inhomogen und instabil. Formaldehyd mit dem Dräger-Röhrchen 0,5 im schaum gemessen betrug in den ersten drei Tagen nur noch zwischen 0 und 0,5 ppm.

## Beispiel 3

Man verfuhr nach Beispiel 1, löste jedoch in der Harzlösung unter Rühren 2,5 g Magnesiumchlorid und anschließend 70 g, d.h. 17,5 Gew.-%, geprillten Harnstoff.

Das Litergewicht des Frischschaumes betrug 40 g, die Abbindezeit 10 s. Formaldehyd gemessen wie im Vergleichsbeispiel: 1. Tag 4 ppm, 8. Tag 3 ppm.

Die Lamellenstruktur des Schaums war homogen und stabil.

## Beispiel 4

Man verfuhr nach Beispiel 1, versetzte jedoch die Harzlösung unter Rühren mit 60 g, d.h. 15 Gew.-%, Harnstoff und anschließend mit 8 ml einer 1%igen Phosphorsäure.

Das Litergewicht des Schaumes betrug 35 g (ermitteltes Trockengewicht: 14 kg/m').

Formaldehyd gemessen wie im Vergleichsbeispiel 1: am 1. Tag 3 ppm, am 8. Tag 2 ppm.

Die Lamellenstruktur des Schaumes war homogen und stabil.

## Beispiel 5

Man verfuhr nach Beispiel 1, versetzte jedoch die Harzlösung mit 80 g, d.h. 20 Gew.-%, Harnstoff und die Harzlösung und die Schaummittellösung mit je 6 g Natriumchlorid.

Das Litergewicht des Frischschaumes betrug 50 g, die Abbindezeit 45 s. Formaldehyd gemessen wie im Vergleichsbeispiel 1: am 1. Tag 2 ppm, am 8. Tag 2 ppm.

Die Lamellenstruktur des Schaumes war homogen und stabil.

## Beispiel 6

Man verfuhr nach Beispiel 1, versetzte jedoch die Harzlösung mit 60 g, d.h. 15 Gew.-%, Harnstoff und 4 ml einer 1 %igen Oxalsäurelösung und löste in der Schaummittellösung 6 g Oxalsäure.

Das Litergewicht des Schaumes betrug 46 g, die Abbindezeit 30 s. Formaldehyd gemessen wie im Vergleichsbeispiel 1: am 1. Tag 3 ppm, am 8. Tag 2 ppm.

Die Lamellenstruktur des Schaumes war homogen und stabil.

## Beispiel 7

Man verfuhr nach Beispiel 1, versetzte jedoch die Harzlösung mit 60 g, d.h. 15 Gew.-%, Harnstoff und die Sarzlösung und die Schaummittellösung mit je 5 ml einer Lösung von 29 g Magnesiumsulfat in 100 ml Wasser.

Das Litergewicht des Frischschaumes betrug 39 g, die Abbindezeit 30 s. Formaldehyd gemessen wie im Vergleichsbeispiel 1: am 1. Tag 3,5 ppm, am 8. Tag 3 ppm.

Die Lamellenstruktur des Schaumes war homogen und stabil.

Wie aus vorstehenden Beispielen ersichtlich ist, weisen Schäume, denen man vor dem Verschäumen bis zu 12 Gew.% Harnstoff, bezogen auf das Gewicht des Harzfeststoffs, zusetzte, zwar relativ gute und stabile Lamellenstruktur auf, weisen aber eine relativ große Menge an freiem Formaldehyd auf.

Schäume dagegen, denen man vor dem Verschäumen mehr als 12 Gew.-% Harnstoff zusetzt, besitzen zwar nur eine geringe Menge an freiem Formaldehyd, weisen jedoch eine inhomogene und instabile Lamellenstruktur auf.

Die erfindungsgemäßen Schäume, denen man vor dem Verschäumen mehr als 12 Gew.-% Harnstoff und gleichzeitig ein Conectionsmittel zusetzte, weisen sowohl eine geringe Menge an freiem Formaldehyd als auch eine befriedigende Lamellenstruktur auf.

## Patentansprüche

1. Verfahren zur Herstellung eines formaldehydarmen Harnstoff-Formaldehyd-Kombinations-Schaumes durch Verschäumen einer Lösung eines Harnstoff-Formaldehyd-Harz-Vorkondensates mit einer Härter-Schaummittellösung unter Zugabe von zusätzlichem Harnstoff, dadurch gekennzeichnet, daß man einer übl;chen Lösung eines Harnstoff-Formaldehyd-Harz-Vorkondensats vor dem Verschäumen bis zu 50 % Harnstoff, bezogen auf Harzfeststoff, und zusätzlich eine oder mehrere Verbindungen aus der Gruppe der schwefelhaltigen Alkylverbindungen, gesättigten einbasischen Carbonsäuren, gesättigten und ungesättigten Dicarbonsäuren, Purinverbindungen, anorganischen Säuren der Gruppe der Halogene und Chalkogene und deren Salze, Phosphorsäuren und deren Salze, Alkalimetallsalze und Erdalkalimetallsalze in einer geringen Menge zusetzt, die so bemessen ist, daß ein pH-Wert von 7 nicht unterschritten wird, und anschließend die Lösung mit einer Härter-Schaummittellösung auf übliche Weise verschäumt.

2. Verfahren nach Anspruch 1, dadurch gekennzeichnet, daß man als zusätzliche Verbindungen Magnesiumchlorid, Natriumchlorid, Oxalsäure oder Phosphorsäure verwendet.

3. Verfahren nach Anspruch 1, dadurch gekennzeichnet, daß man einen Teil derjenigen zusätzlichen Verbindungen, die im sauren Milieu nicht als Härter wirken, der Schaummittellösung vor dem Verschäumen zusetzt.

## Claims

1. A method of preparing a urea formaldehyde combination foam that is low in formaldehyde by foaming a solution of a urea formaldehyde resin precondensate with a solution of a hardener and a foaming agent while admixing additional urea, characterized in that one adds to a conventional solution of a urea formaldehyde resin precondensate, before the foaming, up to 50% urea, relative to the resin solid, and in addition one or several compounds from the group of sulfurous alkyl compounds, saturated monobasic carboxylic acids, saturated and unsaturated dicarboxylic acids, purine compounds, inorganic acids of the group of halogens and chalcogens and their salts, phosphoric acids and their salts, alkali metal salts and alkaline earth metal salts in a small quantity that is proportioned in such a way that the pH does not fall below 7, and subsequently foams the solution with a hardener/foaming-agent solution in a conventional manner.

2. A method according to Claim 1, characterized in that magnesium chloride, sodium chloride, oxalic acid or phosphoric acid are used as additional compound.

3. A method according to Claim 1, characterized in that a part of those additional compoundswhich doe not act as hardeners in the acid range are added to the foaming-agent solution before the foaming.

## Revendications

1. Procédé pour la fabrication d'une mousse constituée par une combinaison d'urée et de formaldéhyde pauvre en formaldéhyde par moussage d'une solution d un précondensat d'urée, de formaldéhyde et de résine avec une solution de durcisseur et d'agent de moussage et par addition d urée supplémentaire, caractérisé en ce qu'on ajoute avant le moussage une solution usuelle d'un précondensat d'urée, de formaldéhyde et de résine renfermant jusqu'à 50% d'urée par rapport à la résine solide et complémentairement, un ou plusieurs composés du groupe des composés alkyles renfermant du soufre, des acides carboxyliques saturés monobasiques, des diacides saturés et insaturés, des composés puriniques, des acides inorganiques du groupe des halogènes et chalcogènes et leurs sels, des acides phosphoriques et leurs sels, des sels de métal alcalin ou alcalino-terreux en une faible quantité qui est mesurée de telle sorte qu une valeur de pH égale à 7 n'est pas dépassée, à la suite de quoi la solution est mise sous forme de mousse d'une manière connue avec une solution de durcisseur et d'agent de moussage.

2. Procédé selon la revendication 1, caractérisé en ce qu on utilise comme composé complémentaire, du chlorure de magnésium, du chlorure de sodium, de l'acide oxalique ou de l'acide phosphorique.

3. Procédé selon la revendication 1, caractérisé en ce qu'on ajoute une partie des composés complémentaires qui n'agissent pas comme durcisseur dans le milieu acide, à la solution de l'agent de moussage avant l'opération de moussage.